# EUROPÄISCHE PATENTSCHRIFT

(11) **EP 1 103 845 B1**
(45) Veröffentlichungstag und Bekanntmachung des Hinweises auf die Patenterteilung: **09.02.2005**
(21) Anmeldenummer: 00126028.0
(22) Anmeldetag: 29.11.2000
(51) Int. Cl.: G03B 21/12, H04N 7/173

(54) **Verfahren und Vorrichtung zur Steuerung von Einrichtungen für eine Kinovorführung**
Method and apparatus for controlling devices for a cinematographic presentation
Méthode et appareil pour commander des dispositifs pour une présentation cinématographique

(30) Priorität: 29.11.1999 DE 19957374
(43) Veröffentlichungstag der Anmeldung: 30.05.2001
(73) Patentinhaber: Eckstein, Barbara, 88690 Uhldingen-Mühlhofen (DE)
(72) Erfinder: Hiltmann, Jörg, 88241 Ravensburg (DE)
(74) Vertreter: Patentanwälte Eisele, Otten, Roth & Dobler

(56) Entgegenhaltungen:
- WO-A-97/41546
- US-A- 3 907 419
- US-A- 5 140 414
- US-A- 5 729 279
- US-A- 5 924 013

## Beschreibung

Die Erfindung betrifft ein Verfahren und eine Vorrichtung zur Steuerung von Einrichtungen für eine Kinovorführung sowie ein System zur Kinovorführung nach dem jeweiligen Oberbegriff des Anspruchs 1, 12 bzw. 17.

Eine Kinovorführung besteht regelmäßig aus den folgenden Teilen:

Dias für die Werbung für lokale Firmen bzw. Veranstaltungen, einem Videofilm für die Werbung für überregional tätige Firmen und einem Hauptfilm.

Der Hauptfilm und der Videofilm werden im Allgemeinen von einem 35 mm Hauptprojektor gezeigt. Die Dias für die lokale Werbung werden von einem separaten Diaprojektor auf die Leinwand projeziert.

Regelmäßig beginnt eine Vorführung mit Dias. Darauf folgt der Videofilm. Anschließend werden wieder Dias gezeigt, um die Zeit zu überbrücken, die benötigt wird, um den gezeigten Videofilm vom Projektor zu nehmen und den Hauptfilm einzulegen.

Dias und Videofilme werden für jedes Kino nach den Wünschen der Kunden, die die Werbung schalten, produziert.

Die Herstellungsverfahren sind hinsichtlich des finanziellen Aufwands und der Produktionszeit für Videofilme als auch Dias, wenngleich diese sich schneller produzieren lassen, nicht unerheblich.

Des Weiteren müssen die Dias, da sie einem vergleichsweise hohen Verschleiß unterworfen sind, in bestimmten Zeitabständen erneuert werden.

Für den Ablauf einer Kinovorführung wird eine sogenannte Kinomatrix genutzt. Unter Kinomatrix wird eine regelmäßig bei Kinohauptprojektoren verwendete Steckplatte verstanden, auf welcher durch manuelles Umstecken von Brücken bzw. Reitern sich neben dem Kinohauptprojektor auch andere Einrichtungen für eine Kinovorführung steuern lassen. Die Bedienung der Kinomatrix erfordert technisches Personal, das die Betriebskosten eines Kinos erhöht.

In der deutschen Offenlegungsschrift DE-A-2 542 444 wird ein System zum Automatisieren einer Kinovorstellung beschrieben, das dazu-eingerichtet ist, die Programmteile dieser Vorstellung in einer gewünschten Reihenfolge automatisch abwickeln zu können. Es ist versehen mit einem Filmstreifen, der außer dem zu projizierenden Film, in Längsrichtung verlaufende Informationsblöcke enthält, wobei jeder Informationsblock in einer Streifenposition angeordnet ist, die dem Anfang eines bestimmten Programmteils entspricht und die Länge eines betreffenden Informationsblockes für die Identität eines bestimmten Programmteils bestimmend ist, mit einer Detektionsvorrichtung zum Detektierten der genannten Informationsblöcke, sowie auch zum Abgeben eines elektrischen Signals, das kennzeichnend ist für die Länge eines detektierten Informationsblocks. Des Weiteren umfasst das System eine verarbeitungsvorrichtung, die ansprechend auf ein solches kennzeichnendes elektrisches Signal die mit dem betreffenden Programmteil verbundenen technischen Handlungen ausführen lässt.

Die britische Patentanmeldung GB-A 2 164 465 offenbart ein Kinoprojektionssystem, bei welchem aus einem Behälter ein Endlosfilm zu einem Projektor geführt wird. Das Projektionssystem umfasst außerdem einen Speicherbereich für Filmdaten, die Bedienung des Projektors sowie des Lichts, der Vorgänge, die Pausenmusik, wobei die ganzen Abläufe von einem Mikroprozessor automatisch gesteuert werden, der mit einem zentralen Computersystem in Verbindung steht, das die Abläufe überwacht, Befehle gibt und einen Alarm, wenn notwendig, auslöst. In der GB-A-2 164 465 geht es also darum, einen automatischen Ablauf einer Kinovorführung zu gewährleisten und sicherer zu machen.

In beiden Schriften werden somit lediglich Maßnahmen beschrieben, um den automatischen Ablauf einer Kinovorführung zu verbessern.

Das US-Patent US-A-5,924,013 offenbart die Verwendung eines digitalen (Haupt-) Projektors in einem Kinosystem. Kern dieser Druckschrift ist die Übertragung digitaler Daten fürs Kino. Derartige Systeme sind vergleichsweise teuer.

### Aufgabe und Vorteile der Erfindung:

Der Erfindung liegt die Aufgabe zu Grunde, den zeitlichen und finanziellen Aufwand für Werbung in Kinovorführungen herabzusetzen.

Diese Aufgabe wird durch die Merkmale der Ansprüche 1, 11 bzw. 16 gelöst.

In den Unteransprüchen sind vorteilhafte und zweckmäßige Weiterbildungen der Erfindung angegeben.

Die Erfindung geht zunächst von einem Verfahren zur Steuerung von Einrichtungen für die Kinovorführung aus, die einen Kinohauptprojektor mit einer Kinomatrix umfassen. Der Kern der Erfindung liegt nun darin, dass ein digitaler Projektor und eine Rechnereinheit vorhanden sind, dass durch die Rechnereinheit eine Projektionslampe des digitalen Projektors eingeschaltet wird, dass nach einer Wartezeit am digitalen Projektor die Projektion von digitalen Bild- und/oder Videosequenzen durch die Rechnereinheit gestartet wird, dass bei einem vordefinierten Zeitpunkt vor oder nach dem Ende der Projektion von digitalen Bild- und/oder Videosequenzen eine Projektionslampe des Kinohauptprojektors durch die Rechnereinheit über die Kinomatrix eingeschaltet wird. Durch diese Vorgehensweise wird es auf elegante Art möglich, die Kinowerbung in Kinovorführungen durch digitale Werbeeinzelbilder und digitale Werbevideofilme zu ersetzen. Digitale Einzelbilder bzw. Videofilme lassen sich schnell und kostengünstig produzieren und unterliegen auch keinem Verschleiß. Des Weiteren entfällt die sonst notwendige Konvertierung eines Werbefilms auf das Format des Kinohauptprojektors vollständig. Weiterhin sind schnelle Aktualisierungen auch Teilaktualisierungen von Einzelbildern und Videofilmen möglich, was insbesondere durch lokale Firmen genützt werden kann, um kurzfristige Werbeaktionen einzuspeisen. Darüber hinaus lässt sich in einfacher Form auch ein Nachrichtenprogramm verwirklichen. Als weiterer wesentlicher Vorteil lässt sich der Ablauf einer Kinovorführung unter Nutzung bestehender Kinotechnik (Kinomatrix) automatisieren, wodurch der erforderliche Personaleinsatz reduziert werden kann und die Investitionskosten für die Implementierung eines erfindungsgemäßen Verfahrens überschaubar bleiben.

Um für Kinopublikum einen angenehmen Überblendungseffekt zu erzielen, wird im Weiteren vorgeschlagen, dass nach dem Einschalten der Projektionslampe des Kinohauptprojektors die Projektionslampe des digitalen Projektors abgeschaltet wird.

In einer besonders vorteilhaften Ausgestaltung der Erfindung wird die Projektionslampe des digitalen Projektors von der Rechnereinheit auf Grund eines Signals von der Kinomatrix abgeschaltet. In diesem Zusammenhang ist es vorteilhaft, wenn das Signal der Kinomatrix zur Abschaltung der Projektionslampe des digitalen Projektors mittels einer Markierung im Filmmaterial, das auf dem Kinohauptprojektor läuft, generiert wird. Üblicherweise sind auf einem 35 mm-Filmmaterial Silberstreifen angebracht, die für ein derartiges Signal genutzt werden können.

Für eine weitere Automatisierung einer Kinovorführung wird überdies vorgeschlagen, dass nach dem Start der Rechnereinheit, vorzugsweise nach einer Wartezeit von z. B. 5 Sekunden, vor dem Einschalten der Projektionslampe des digitalen Projektors oder des Kinohauptprojektors von der Rechnereinheit über die Kinomatrix ein Kinovorhang geöffnet wird. Im Hinblick auf eine Automatisierung ist es außerdem bevorzugt, wenn vor dem Einschalten der Projektionslampe des digitalen Projektors oder des Kinohauptprojektors von der Rechnereinheit über die Kinomatrix die Leuchtstärke des Saallichts reduziert wird. Die Leuchtstärke des Saallichts kann z. B. auf 50 % reduziert werden, wenn mit dem digitalen Projektor oder dem Kinohauptprojektor ein Vorprogramm gezeigt wird. Beispielsweise kann nach dem Öffnen des Vorhangs z. B. nach einer Wartezeit von 15 Sekunden die Herabsetzung der Beleuchtungsstärke erfolgen.

In eine Automatisierung der Kinovorführung kann auch die Tonanlage mit eingeschlossen werden, indem vorzugsweise vor dem Einschalten der Projektionslampe des digitalen Projektors oder des Kinohauptprojektors von der Rechnereinheit die Tonanlage über die Kinomatrix eingeschaltet wird. Dieser Vorgang kann z. B. nach einer Wartezeit von 5 Sekunden nach Herabsetzen der Leuchtstärke der Saalbeleuchtung stattfinden.

In einer überdies vorteilhaften Ausgestaltung der Erfindung wird zunächst die Projektionslampe des Kinohauptprojektors von der Rechnereinheit über die Kinomatrix für ein Vorprogramm eingeschaltet. Nach Beendigung des Vorprogramms wird im Anschluss daran durch die Rechnereinheit die Projektionslampe des digitalen Projektors nach einer Wartezeit von z. B. 5 Sekunden nach Abschalten der Projektionslampe des Kinohauptprojektors eingeschaltet.

Im Weiteren ist es bevorzugt, wenn nach Abschalten der Projektionslampe des digitalen Projektors mittels der Rechnereinheit nach einer Wartezeit über die Kinomatrix die Leuchtstärke des Saallichts für die Hauptfilmvorführung herabgesetzt wird, z. B. auf 5 %. Außerdem ist es vorteilhaft, wenn die Projektionslampe des Hauptprojektors von der Rechnereinheit auf Grund einer Markierung auf dem vorgeführten Filmmaterial ausgeschaltet wird. Durch diese Maßnahme ist der Ausschaltzeitpunkt an keine von der Rechnereinheit vorgegebene Wartezeit gebunden, die gegebenenfalls zu Ungenauigkeiten in der Steuerung führen kann.

In einer überdies bevorzugten Ausgestaltung der Erfindung wird von der Rechnereinheit kurz vor dem Abschalten der Lampe des Kinohauptprojektors oder im Anschluss daran, das Saallicht vollständig eingeschaltet und/oder die Tonanlage ausgeschaltet und/oder der Vorhang geschlossen. Somit kann eine Kinovorführung mittels der Rechnereinheit vollständig automatisiert werden.

Bei einer Vorrichtung zur Steuerung von Einrichtungen für die Kinovorführung mit Organen zur Eingabe von digitalen Daten liegt ein wesentlicher Aspekt der Erfindung darin, dass eine Rechnereinheit mit Mittel zur Ansteuerung eines digitalen Projektors und Mittel zur Ansteuerung einer Kinomatrix eines Kinohauptprojektors vorgesehen ist. Durch die Einbindung der Kinomatrix sowie die Verwendung eines digitalen Projektors lässt sich über die Rechnereinheit die Kinovorführung im Wesentlichen vollautomatisch durchführen. Der digitale Projektor erlaubt dabei die Realisierung eines kostengünstigen Vorprogramms in Form von Einzelbildern und/oder Videofilmen.

In einer weiteren vorteilhaften Ausgestaltung der Erfindung umfassen die Mittel zur Ansteuerung der Kinomatrix neben einer Sendeeinheit auch eine Empfangseinheit, die Signale von der Kinomatrix empfangen kann. Auf diese Weise wird es möglich, dass z. B. eine Markierung auf dem Filmmaterial, das auf dem Kinohauptprojektor läuft, eine Steuerung des Kinohauptprojektors über die Rechnereinheit vorgenommen werden kann.

Im Weiteren ist es bevorzugt, wenn die Rechnereinheit zur Abarbeitung eines Skript für die Einzelbilddarstellung und/oder für einen Videofilm ausgelegt ist. Mittels eines solchen Skripts kann die Abfolge von Einzelbildern und/oder Videofilmen, z. B. auch mit erforderlichen Überblendungen, vorgegeben werden.

Um eine ausreichende Qualität der projizierten digitalen Bilder zu erhalten, wird überdies vorgeschlagen, dass die Mittel zur Ansteuerung des digitalen Projektors für eine Ansteuerung des Projektors mit wenigstens einer Auflösung der digitalen Bilder von 800 x 600 Bildpunkten ausgelegt sind.

Vorzugsweise ist die Rechnereinheit ein modifizierter herkömmlicher PC neuerer Generation.

Ein System zur Kinovorführung umfasst vorzugsweise eine erfindungsgemäße Vorrichtung zur Steuerung von Einrichtungen für die Kinovorführung, einen digitalen Projektor und einen Kinohauptprojektor mit Kinomatrix. Beispielsweise können auch mehrere digitale Projektoren zum Einsatz kommen.

In einer besonders vorteilhaften Ausgestaltung der Erfindung umfasst das System eine Sendestation, die zur Übertragung von Einzelbild und/oder Bildablaufskripten sowie digitalen Einzelbildern und/oder Videofilmen ausgelegt ist. Durch diese Maßnahme wird es auf elegante Art möglich, Daten für die digitale Werbung von einem zentralen Ort, z. B. dem Erstellungsort der Bildfolgen und Videofilme an eine oder mehrere Kinos mittels einer Datenfernübertragung zu übermitteln. Für eine Datenfernübertragung kommt z. B. ISDN, Satellitenübertragung oder Funkübertragung in Betracht. Auf diese Weise können Videoablaufskripte mit zugehörigen digitalen Bildinformationen an einem Rechner erstellt und unmittelbar von diesem durch einen Datentransfer an eine Rechnereinheit von einem oder mehreren Kinos übermittelt werden.

Durch den Einsatz eines digitalen Projektors reduzieren sich nicht nur die Kosten für die Produktion von Einzelbildern und Videofilmen, sondern es findet auch eine deutliche Zeitersparnis bei der Erstellung der digitalen Werbung statt. Damit kann schneller auf Wünsche von Kunden reagiert werden. Dadurch wird auf Grund der Kostenersparnis Kinowerbung in guter Qualität auch für kleine lokale Firmen erschwinglich.

Der Kinohauptprojektor muss nicht zwangsläufig ein Projektor für bislang verwendetes z. B. 35 mm Filmmaterial sein. Er kann auch als digitaler Projektor ausgestaltet werden, wodurch es möglich wird, die komplette Kinovorführung mit nur einem Projektor durchzuführen. Das heißt, digitaler Projektor und "analoger" Kinohauptprojektor verschmelzen zu einem digitalen Kinohauptprojektor mit Kinomatrix, der jedoch in analoger Weise von der erfindungsgemäßen Vorrichtung zur Steuerung von Einrichtungen für die Kinovorführung gesteuert und mit Bildmaterial versorgt werden kann.

### Zeichnungen

Ein Ausführungsbeispiel der Erfindung ist in den Zeichnungen dargestellt und unter Angabe weiterer Vorteile und Einzelheiten näher erläutert. Es zeigen
- Fig. 1: ein System zur Kinovorführung in einer schematischen Darstellung und
- Fig. 2: eine Vorrichtung zur Steuerung von Einrichtungen für die Kinovorführung in einem schematischen Blockschaltbild.

### Beschreibung des Ausführungsbeispiels

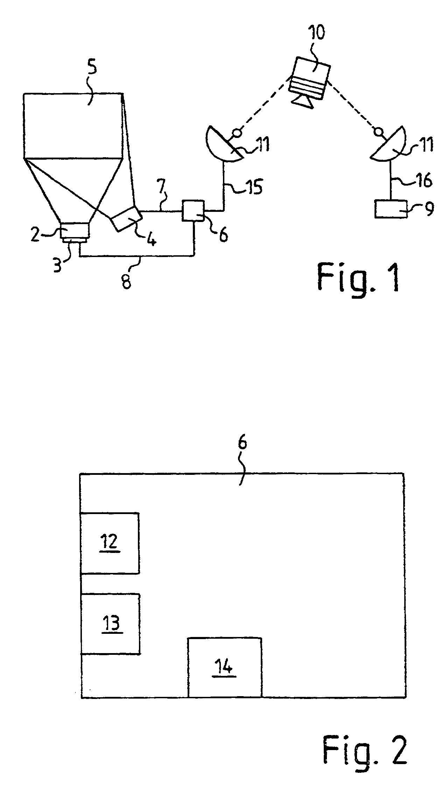

Das System 1 zur Kinovorführung umfasst, wie in Figur 1 gezeigt, einen Kinohauptprojektor 2 mit einer Kinomatrix 3 und einen digitalen Projektor 4 zur Projektion von Bildmaterial (Einzelbilder, Filme) auf eine Leinwand 5. Der digitale Projektor 4 und die Kinomatrix 3 des Kinohauptprojektors 2 sind mit einer Vorrichtung 6 zur Steuerung von Einrichtungen für die Kinovorführung, im Folgenden mit "Kinoplayer 6" bezeichnet, über die Verbindungsleitungen 7, 8 verbunden. Der Kinoplayer 6 verfügt über Mittel zur Eingabe von digitalen Daten, beispielsweise ein CD-Rom oder DVD-Laufwerk oder eine Karte für die Datenübertragung, insbesondere Datenfernübertragung, z.B. eine DBV-Karte (Digital Broadcast Video-Karte), so dass, wie in Figur 1 dargestellt, eine Übermittlung von Daten von einer Sendestation 9 via Satellit 10 über Antennen 11 und Verbindungsleitungen 15, 16 an den Kinoplayer 6 stattfinden kann.

Das Kernstück der Erfindung ist der Kinoplayer 6, der nochmals schematisch und vergrößert in Figur 2 abgebildet ist. Der Kinoplayer 6 besitzt Mittel 12 zur Ansteuerung eines digitalen Projektors 4, beispielsweise in Form einer PC-Steckkarte (z. B. Graphikkarte, Matrox G200 in Kombination mit einer Steckkarte MPEG2 Hollywood Plus). Damit lässt sich z. B. eine digitale Bildwiedergabe im Format 800 x 600 realisieren. Die Mittel zur Steuerung eines digitalen Projektors umfassen auch eine entsprechend ausgelegte Software für die Erstellung und Verteilung von Skripten für die Abfolge von Einzelbilder und/oder Videofilmen. Im Weiteren sind im Kinoplayer 6 Mittel 13 zur Ansteuerung einer Kinomatrix 3 vorhanden, beispielsweise in Form einer weiteren Steckkarte (z. B. eine Relop-Karte).

Außerdem sind Organe 14 zur Eingabe von digitalen Daten vorgesehen. Gegebenenfalls sind diese Organe auch dazu ausgelegt, einen Datenaustausch von digitalen Daten vorzunehmen.

Mit Hilfe des Kinoplayers 6 kann eine Kinovorführung vollautomatisch ablaufen. Beispielsweise sind folgende Ablaufprotokolle realisierbar:
a) Nachdem der Kinoplayer 6 gestartet wurde, wird nach einer Wartezeit von 5 Sekunden der Vorhang geöffnet, nach einer weiteren Wartezeit von 5 Sekunden die Leuchtstärke des Saallichts auf beispielhaft 50 % herabgesetzt und nach einer weiteren Wartezeit von 5 Sekunden die Tonanlage vom Kinoplayer 6 eingeschaltet.
   Nach einer weiteren Wartezeit von z. B. 15 Sekunden wird vom Kinoplayer 6 die Projektionslampe des digitalen Projektors 4, z. B. ein digitaler LCD-Projektor oder ein DLP-Projektor (Digital Light Processing-Projektor), eingeschaltet.
   Der Kinoplayer 6 startet daraufhin nach einer erneuten Wartezeit die Projektion von digitalen Bildern und/oder eines digitalen Films.
   Anschließend wird die Projektionslampe des digitalen Projektors 4 vom Kinoplayer 6 abgeschaltet und die Projektionslampe des Kinohauptprojektors 2 eingeschaltet. Auch hier können Wartezeiten eingefügt werden. Bei einem Kinohauptprojektor 2 für 35 mm Filmmaterial beginnt der Filmtransport ebenfalls mit Einschalten der Projektionslampe. Sobald die Projektionslampe des Kinohauptprojektors 2 eingeschaltet wird, kann der Kinoplayer 6 die Leuchtstärke der Saalbeleuchtung auf z. B. 5 % herabsetzen.
   Nun kann der Kinohauptfilm mit gegebenenfalls einer vorangestellten Kinovorschau gezeigt werden. Am Ende des Kinohauptfilms wird die Beleuchtung im Saal vom Kinoplayer 6 wieder vollständig eingeschaltet, die Tonanlage abgeschaltet und der Vorhang geschlossen. Zwischen diesen Vorgängen lassen sich ebenfalls kurze Wartezeiten einfügen.
b) In einem anderen Ablaufprotokoll kann die Projektion von digitalen Bildern zwischen Projektionen mit dem Kinohauptprojektor 2 eingeschlossen werden.
   In diesem Fall wird nach dem Öffnen des Vorhangs, dem Herabsetzen der Leuchtstärke der Saalbeleuchtung auf beispielhaft 50 % und dem Einschalten der Tonanlage die Projektionslampe des Kinohauptprojektors 2 vom Kinoplayer 6 zur Vorführung eines Kinovorprogramms eingeschaltet. Anschließend wird vom Kinoplayer 6 die Projektionslampe des Kinohauptprojektors 2 abgeschaltet und nach gegebenenfalls einem oder mehreren Wartezeiträumen die Projektionslampe des digitalen Projektors 4 für eine Projektion von digitalen Bildern für Kinowerbung eingeschaltet. Der weitere Ablauf kann wie beim ersten Ablaufprotokoll ausgestaltet sein.

### Bezugszeichenliste:

- 1: System zur Kinovorführung
- 2: Kinohauptprojektor
- 3: Kinomatrix
- 4: digitaler Projektor
- 5: Leinwand
- 6: Kinoplayer
- 7: Verbindungsleitung
- 8: Verbindungsleitung
- 9: Sendestation
- 10: Satellit
- 11: Antenne
- 12: Mittel zur Ansteuerung eines digitalen Projektors
- 13: Mittel zur Ansteuerung einer Kinomatrix
- 14: Organe zur Eingabe von digitalen Daten
- 15: Verbindungsleitung
- 16: Verbindungsleitung

## Patentansprüche

1. Verfahren zur Steuerung von Einrichtungen für eine Kinovorführung, die einen bestehenden Kinohauptprojektor mit einer Kinomatrix umfassen, **dadurch gekennzeichnet, dass** ein digitaler Projektor (4) und eine separate Rechnereinheit (6) eingesetzt werden, dass durch die Rechnereinheit (6) eine Projektionslampe am digitalen Projektor (4) eingeschaltet wird, dass nach einer Wartezeit am digitalen Projektor die Projektion von digitalen Bild- und/oder Videosequenzen durch die Rechnereinheit mit digitalen Bild- und/oder Videodaten von der Rechnereinheit gestartet wird, dass bei einem vordefinierten Zeitpunkt vor oder nach dem Ende der Projektion von digitalen Bild- und/oder Videosequenzen eine Projektionslampe des Kinohauptprojektors (2) durch die Rechnereinheit (6) über die Kinomatrix (3) eingeschaltet wird.

2. Verfahren nach Anspruch 1, **dadurch gekennzeichnet, dass** nach dem Einschalten der Projektionslampe des Kinohauptprojektors die Projektionslampe des digitalen Projektors (4) abgeschaltet wird.

3. Verfahren nach Anspruch 1 oder 2, **dadurch gekennzeichnet, dass** die Projektionslampe des digitalen Projektors (4) von der Rechnereinheit (6) auf Grund eines Signals von der Kinomatrix (3) abgeschaltet wird.

4. Verfahren nach einem der vorhergehenden Ansprüche, **dadurch gekennzeichnet, dass** das Signal von der Kinomatrix (3) zur Abschaltung der Projektionslampe des digitalen Projektors (4) mittels einer Markierung im Filmmaterial, das auf dem Kinohauptprojektor (2) läuft, generiert wird.

5. Verfahren nach einem der vorhergehenden Ansprüche, **dadurch gekennzeichnet, dass** nach dem Start der Rechnereinheit (6) und vor dem Einschalten der Projektionslampe des digitalen Projektors (4) von der Rechnereinheit (6) über die Kinomatrix ein Kinovorhang geöffnet wird.

6. Verfahren nach einem der vorhergehenden Ansprüche, **dadurch gekennzeichnet, dass** vor dem Einschalten der Projektionslampe des digitalen Projektors (4) oder des Kinohauptprojektors (2) mittels der Rechnereinheit (6) über die Kinomatrix (3) die Leuchtstärke des Saallichts reduziert wird.

7. Verfahren nach einem der vorhergehenden Ansprüche, **dadurch gekennzeichnet, dass** vor dem Einschalten des digitalen Projektors (4) oder des Kinohauptprojektors (2) mittels der Rechnereinheit (6) über die Kinomatrix die Tonanlage eingeschaltet wird.

8. Verfahren nach einem der vorhergehenden Ansprüche, **dadurch gekennzeichnet, dass** zunächst die Projektionslampe des Kinohauptprojektors (2) von der Rechnereinheit (6) über die Kinomatrix für ein Vorprogramm eingeschaltet wird, und dass im Anschluss daran durch die Rechnereinheit (6) die Projektionslampe des digitalen Projektors (6) nach einer Wartezeit nach Abschalten der Projektionslampe des Kinohauptprojektors eingeschaltet wird.

9. Verfahren nach einem der vorhergehenden Ansprüche, **dadurch gekennzeichnet, dass** nach Abschalten der Projektionslampe des digitalen Projektors (4) mittels der Rechnereinheit (6) über die Kinomatrix (3) nach einer Wartezeit die Leuchtstärke des Saallichts für die Hauptvorführung herabgesetzt wird.

10. Verfahren nach einem der vorhergehenden Ansprüche, **dadurch gekennzeichnet, dass** die Projektionslampe des Kinohauptprojektors (2) von der Rechnereinheit (6) auf Grund einer Markierung auf dem vorgeführten Filmmaterial ausgeschaltet wird.

11. Verfahren nach einem der vorhergehenden Ansprüche, **dadurch gekennzeichnet, dass** von der Rechnereinheit (6) kurz vor dem Abschalten der Projektionslampe des Kinohauptprojektors (2) oder im Anschluss daran das Saallicht vollständig eingeschaltet und/oder die Tonanlage ausgeschaltet und/oder ein Kinovorhang geschlossen wird.

12. Vorrichtung zur Steuerung von Einrichtungen für die Kinovorführung, welche Vorrichtung Organe (14) zur Eingabe von digitalen Daten und eine Rechnereinheit (6) mit Mitteln (12) zur Ansteuerung eines digitalen Projektors (4) umfasst, wobei in der Rechnereinheit die digitalen Bild- und/oder Videodaten für den digitalen Projektor abgelegt sind, **dadurch gekennzeichnet, dass** die Rechnereinheit Mittel (13) zur Ansteuerung einer Kinomatrix (3) eines Kinohauptprojektors aufweist.

13. Vorrichtung nach Anspruch 12, **dadurch gekennzeichnet, dass** die Mittel (13) zur Ansteuerung der Kinomatrix neben einer Sendeeinheit auch eine Empfangseinheit umfassen, die Signale von der Kinomatrix (3) empfangen kann.

14. Vorrichtung nach Anspruch 12 oder 13, **dadurch gekennzeichnet, dass** die Rechnereinheit (6) zur Abarbeitung eines Skripts für die Einzelbilddarstellung und/oder eines Videofilms ausgelegt ist.

15. Vorrichtung nach einem der Ansprüche 12 bis 14, **dadurch gekennzeichnet, dass** die Mittel (12) zur Ansteuerung des digitalen Projektors (4) für eine Ansteuerung des digitalen Projektors (4) mit wenigstens einer Auflösung der digitalen Bilder von 800 x 600 Bildpunkten ausgelegt sind.

16. Vorrichtung nach einem der vorhergehenden Ansprüche 12 bis 15, **dadurch gekennzeichnet, dass** die Rechnereinheit (6) ein PC ist.

17. System zur Kinovorführung mit einer Vorrichtung nach einem der vorhergehenden Ansprüche 12 bis 16, mit wenigstens einem digitalen Projektor und einem Kinohauptprojektor mit Kinomatrix.

18. System nach Anspruch 17, **dadurch gekennzeichnet, dass** eine Sendestation (9) mit umfasst ist, die zur Übertragung von Einzelbild- und/oder Videoablaufskripten sowie digitalen Einzelbildern und/oder Videofilmen an die Rechnereinheit (6) ausgelegt ist.

## Claims

1. A method for controlling appliances for a cinema performance, which comprise an existing main cinema projector with a cinema matrix,
**characterised in that** a digital projector (4) and a separate arithmetic-logic unit (6) are used,
**in that** by the arithmetic-logic unit (6) a projection lamp on the digital projector (4) is switched on,
**in that** after a waiting period at the digital projector the projection of digital image and/or video sequences is started by the arithmetic-logic unit with digital image and/or video data by the arithmetic-logic unit,
**in that** at a predefined instant prior to or after the end of the projection of digital image and/or video sequences a projection lamp of the main cinema projector (2) is switched on by the arithmetic-logic unit (6) via the cinema matrix (3).

2. A method according to Claim 1,
**characterised in that** after switching on the projection lamp of the main cinema projector, the projection lamp of the digital projector (4) is switched off.

3. A method according to Claim 1 or 2,
**characterised in that** the projection lamp of the digital projector (4) is switched off by the arithmetic-logic unit (6) on the basis of a signal from the cinema matrix (3).

4. A method according to one of the preceding Claims,
**characterised in that** the signal is generated by the cinema matrix (3) to switch off the projection lamp of the digital projector (4) by means of a marking in the film material, which is running on the main cinema projector (2).

5. A method according to one of the preceding Claims,
**characterised in that** after the start of the arithmetic-logic unit (6) and prior to switching on the projection lamp of the digital projector (4) by the arithmetic-logic unit (6) via the cinema matrix a cinema curtain is opened.

6. A method according to one of the preceding Claims,
**characterised in that** prior to switching on the projection lamp of the digital projector (2) or of the main cinema projector (2) by means of the arithmetic-logic unit (6) via the cinema matrix (3), the luminosity of the hall light is reduced.

7. A method according to one of the preceding Claims,
**characterised in that** prior to switching on the digital projector (4) or the main cinema projector (2) by means of the arithmetic-logic unit (6) via the cinema matrix the sound system is switched on.

8. A method according to one of the preceding Claims,
**characterised in that** firstly the projection lamp of the main cinema projector (2) is switched on by the arithmetic-logic unit (6) via the cinema matrix for a preliminary programme,
and **in that** following that the projection lamp of the digital projector (6) is switched on by the arithmetic-logic unit (5) after a waiting period after switching off the projection lamp of the main cinema projector.

9. A method according to one of the preceding Claims,
**characterised in that** after switching off the projection lamp of the digital projector (4) by means of the arithmetic-logic unit (6) via the cinema matrix (3), the luminosity of the hall light for the main performance is reduced after a waiting period.

10. A method according to one of the preceding Claims,
**characterised in that** the projection lamp of the main cinema projector (2) is switched off by the arithmetic-logic unit (6) on the basis of a marking on the performed film material.

11. A method according to one of the preceding Claims,
**characterised in that** shortly before switching off the projection lamp of the main cinema projector (2) or following this, the arithmetic-logic unit (6) completely switches on the hall light and/or switches off the sound system and/or closes a cinema curtain.

12. A device for controlling appliances for the cinema performance, which device comprises elements (15) for the input of digital data and an arithmetic-logic control unit (6) having means (12) for controlling a digital projector (4), the digital image and/or video data for the digital projector being deposited in the arithmetic-logic unit,
**characterised in that** the arithmetic-logic unit comprises means (13) for controlling a cinema matrix (3) of a main cinema projector.

13. A device according to Claim 12,
**characterised in that** the means (13) for controlling the cinema matrix also comprise, apart from a transmitting unit, a receiving unit, which can receive signals from the cinema matrix (3).

14. A device according to Claim 12 or 13,
**characterised in that** the arithmetic-logic unit (6) is designed to process a script for the individual image representation and/or a video film.

15. A device according to one of Claims 12 to 14,
**characterised in that** the means (12) for controlling the digital projector (4) are designed for controlling the digital projector (4) with at least a resolution of the digital images of 800 x 600 picture elements.

16. A device according to one of the preceding Claims 12 to 15,
**characterised in that** the arithmetic-logic unit (6) is a PC.

17. A system for the cinema performance having a device according to one of the preceding Claims 12 to 16, having at least one digital projector and a main cinema projector with cinema matrix.

18. A system according to Claim 17,
**characterised in that** a transmitting station (9) is also included, which is designed to transmit individual image and/or video sequence scripts and also individual digital images and/or video films to the arithmetic-logic unit (6).

## Revendications

1. Procédé pour commander des dispositifs pour une projection cinématographique qui comprennent un projecteur cinématographique principal existant avec une matrice cinématographique,
**caractérisé en ce qu'**un projecteur numérique (4) et une unité d'ordinateur séparée (6) sont utilisés, **en ce qu'**une lampe de projection sur le projecteur numérique (4) est allumée par l'unité d'ordinateur (6), **en ce qu'**après un temps d'attente la projection sur le projecteur numérique de séquences d'images et/ou vidéo numériques est démarrée par l'unité d'ordinateur avec des données d'images et/ou vidéo numériques de l'unité d'ordinateur, **en ce qu'**à un moment prédéfini avant ou après la fin de la projection de séquences d'images et/ou vidéo numériques une lampe de projection du projecteur cinématographique principal (2) est allumée par l'unité d'ordinateur (6) par l'intermédiaire de la matrice cinématographique (3).

2. Procédé selon la revendication 1,
**caractérisé en ce que** la lampe de projection du projecteur numérique (4) est éteinte après l'allumage de la lampe de projection du projecteur cinématographique principal (2).

3. Procédé selon la revendication 1 ou 2,
**caractérisé en ce que** la lampe de projection du projecteur numérique (4) est éteinte par l'unité d'ordinateur (6) en raison d'un signal de la matrice cinématographique (3).

4. Procédé selon l'une des revendications précédentes,
**caractérisé en ce que** le signal de la matrice cinématographique (3) pour éteindre la lampe de projection du projecteur numérique (4) est généré au moyen d'un marquage dans le matériau du film qui passe sur le projecteur cinématographique principal.

5. Procédé selon l'une des revendications précédentes,
**caractérisé en ce que**, après le démarrage de l'unité d'ordinateur (6) et avant l'allumage de la lampe de projection du projecteur numérique (4), un rideau de cinéma est ouvert par l'unité d'ordinateur (6) par l'intermédiaire de la matrice cinématographique.

6. Procédé selon l'une des revendications précédentes,
**caractérisé en ce que**, avant l'allumage de la lampe de projection du projecteur numérique (4) ou du projeteur cinématographique principal (2), l'intensité lumineuse de la lumière de la salle est réduite au moyen de l'unité d'ordinateur (6) par l'intermédiaire de la matrice cinématographique (3).

7. Procédé selon l'une des revendications précédentes,
**caractérisé en ce que**, avant l'allumage du projecteur numérique (4) ou du projecteur cinématographique principal (2), l'installation de sonorisation est allumée au moyen de l'unité d'ordinateur (6) par l'intermédiaire de la matrice cinématographique.

8. Procédé selon l'une des revendications précédentes,
**caractérisé en ce que** la lampe de projection du projecteur cinématographique principal (2) est d'abord allumée par l'unité d'ordinateur (6) par l'intermédiaire de la matrice cinématographique pour un avant-programme et **en ce que**, à la suite de cela, la lampe de projection du projecteur numérique (4) est allumée par l'unité d'ordinateur (6) après un temps d'attente suivant l'extinction de la lampe de projection du projecteur cinématographique principal.

9. Procédé selon l'une des revendications précédentes,
**caractérisé en ce que**, après l'extinction de la lampe de projection du projecteur numérique (4), l'intensité lumineuse de la lumière de la salle pour la projection principale est abaissée après un temps d'attente au moyen de l'unité d'ordinateur (6) par l'intermédiaire de la matrice cinématographique (3).

10. Procédé selon l'une des revendications précédentes,
**caractérisé en ce que** la lampe de projection du projecteur cinématographique principal (2) est éteinte par l'unité d'ordinateur (6) en raison d'un marquage sur le matériau du film projeté.

11. Procédé selon l'une des revendications précédentes,
**caractérisé en ce que**, juste avant l'extinction de la lampe de projection du projecteur cinématographique principal (2) ou à la suite de cela, la lumière de la salle est entièrement allumée et/ou l'installation de sonorisation est éteinte et/ou un rideau de cinéma est fermé par l'unité d'ordinateur (6).

12. Dispositif pour la commande de dispositifs pour la projection cinématographique, qui comprend des organes (14) pour entrer des données numériques et une unité d'ordinateur (6) avec des moyens (12) pour commander un projecteur numérique (4), les données d'images et/ou vidéo numériques pour le projecteur numérique étant enregistrées dans l'unité d'ordinateur,
**caractérisé en ce que** l'unité d'ordinateur comporte des moyens (13) pour commander une matrice cinématographique (3) d'un projecteur cinématographique principal.

13. Dispositif selon la revendication 12,
**caractérisé en ce que** les moyens (13) pour commander la matrice cinématographique comprennent, outre une unité d'émission, également une unité de réception qui peut recevoir des signaux de la matrice cinématographique (3).

14. Dispositif selon la revendication 12 ou 13,
**caractérisé en ce que** l'unité d'ordinateur (6) est conçue pour traiter un script pour la projection d'images individuelles et/ou d'un film vidéo.

15. Dispositif selon l'une des revendications 12 à 14,
**caractérisé en ce que** les moyens (12) pour la commande du projecteur numérique (4) sont conçus pour une commande du projecteur numérique (4) avec au moins une résolution des images numériques de 800 x 600 pixels.

16. Dispositif selon l'une des revendications 12 à 15 précédentes,
**caractérisé en ce que** l'unité d'ordinateur (6) est un PC.

17. Système pour la projection cinématographique comportant un dispositif selon l'une des revendications 12 à 16 comprenant, avec au moins un projecteur numérique et un projecteur cinématographique principal avec matrice cinématographique.

18. Système selon la revendication 17,
**caractérisé en ce qu'**une station d'émission (9) est comprise, laquelle est conçue pour transmettre à l'unité d'ordinateur (6) des scripts d'images individuelles et/ou de déroulement vidéo, ainsi que des images individuelles numériques et/ou des films vidéo.
